**Europäisches Patentamt**

**European Patent Office**

**Office européen des brevets**

(19)

(11) Veröffentlichungsnummer: **0 123 873**
**B1**

(12) # EUROPÄISCHE PATENTSCHRIFT

(45) Veröffentlichungstag der Patentschrift:
22.07.87

(21) Anmeldenummer: **84103103.2**

(22) Anmeldetag: **21.03.84**

(51) Int. Cl.⁴: **B 67 D 5/54,** B 01 J 4/02

(54) **Dosiergerät für Flüssigklebstoff.**

(30) Priorität: **29.04.83 DE 8312657 U**

(43) Veröffentlichungstag der Anmeldung:
**07.11.84 Patentblatt 84/45**

(45) Bekanntmachung des Hinweises auf die Patenterteilung:
**22.07.87 Patentblatt 87/30**

(84) Benannte Vertragsstaaten:
**DE FR GB IT**

(56) Entgegenhaltungen:
**DE-C-123 220**
**DE-C-2 741 749**
**FR-A-2 403 547**
**US-A-1 108 016**
**US-A-1 919 501**
**US-A-4 253 583**
**US-A-4 303 180**

(73) Patentinhaber: **DELO Kunststoffchemie GmbH,**
**Lohenstrasse 11, D-8032 München- Gräfelfing (DE)**

(72) Erfinder: **Wirz, Waldemar, Dr. rer. nat., Am**
**Egartsteig 4, D-8021 Icking (DE)**

(74) Vertreter: **Geyer, Werner, Dr.- Ing., Patentanwälte**
**GEYER, HAGEMANN & PARTNER Postfach**
**860329 Ismaninger Strasse 108, D-8000 München**
**86 (DE)**

## Beschreibung

Die Erfindung bezieht sich auf ein Dosiergerät für Flüssigklebstoff, bei dem zur Aufnahme eines Vorratsbehälters mit Flüssigklebstoff ein Drucktank vorgesehen ist, der aus einem in ein Gerätegehäuse versenkten und mit Druckluft beaufschlagbaren Druckbehälter sowie einem diesen oben dichtend verschließbaren Deckel besteht und bei dem eine Schlauchleitung vorgesehen ist, durch die der Flüssigklebstoff aus dem Druckbehälter einem Dosierventil und einer Abgabeeinrichtung zuführbar ist.

Für ein rasches und ein genaues Dosieren und Auftragen von Flüssigklebstoffen, insbesondere von anaeroben Klebstoffen und Zyanacrylatklebstoffen werden vielfach Dosiergeräte eingesetzt, bei denen der in einem Vorratsbehälter enthaltene Klebstoff in einen Drucktank eingeschlossen und dort über eine Kunststoffschlauchleitung unter Druckluft ausgepreßt wird. Die eingesetzten Dosiervorrichtungen werden dabei meist elektropneumatisch angesteuert, wodurch sich genaue Dosierungen der gewünschten Klebstoffmengen bei hoher Funktionssicherheit und guter Reproduzierbarkeit der Abgabemengen erhalten lassen. Solche Dosiergeräte können problemlos z. B. halbautomatisch oder vollautomatisch betrieben und auch in automatisierte Herstellungsprozesse unschwer eingegliedert werden.

Bei einem bekannten Dosiergerät (DE-C-27 41 749) wird der Druckbehälter, in welchem der Vorratsbehälter für den Flüssigklebstoff aufgenomen wird, aus einer mit dem Rand ihrer Öffnung auf eine Bodenplatte dichtend aufgesetzten Glocke gebildet, die gegen die Bodenplatte festklemmbar ist und aus der mittels einer aus dem Druckbehälter geführten Kunststoffschlauchleitung, welche durch ein unterhalb der Bodenplatte angeordnetes Dosierventil geführt wird, der Flüssigklebstoff an die Auftragstelle gebracht werden kann. Das in der DE-C-27 41 749 beschriebene Dosiergerät arbeitet dabei mit einem festklemmen der Glocke gegen die Bodenplatte durch einen über die Glocke stülpbaren Haltebügel, von dem aus über eine Andruckschraube die Glocke gegen den Boden gepreßt wird. Bei dem bekannten Dosiergerät besteht jedoch, wie die Praxis gezeigt hat, die Gefahr, daß bei nicht ausreichend sachgemäßer Handhabung beim Überstülpen bzw. Entfernen des glockenförmigen Drucktanks ein Kippen des oben offenen Vorratsbehälters mit dem flüssigen Klebstoff eintreten kann. Auch erweist sich die Handhabung des Festklemmens der Druckglocke gegen die Unterlage mittels eines überzustülpenden Haltebügels als vielfach umständlich.

In der DE-C-123 220 wird eine Ausschankvorrichtung für Getränkeflaschen beschrieben, bei der für jeweils eine Getränkeflasche ein mit Druckluft beaufschlagbarer Trinkbehälter vorgesehen ist, der mit einem kegelförmig ausgebildeten Deckel dichtend verschließbar ist. Ein Teil des Aufnahmevolumens des Drucktankes wird dabei im Deckel ausgebildet, so daß bei abgenommenem Deckel die im Druckbehälter aufgenommene Flasche mit ihrem oberen Ende etwas über die obere Öffnung des Druckbehälters vorragt. Mittels eines oben in die geöffnete Flasche eingesteckten Schlauches, der durch den Deckel oder die Seitenwandung des Drucktankes nach außen geführt ist, kann unter Einwirkung des Luftdrucks im Drucktank das Getränk aus der Flasche nach außen gedrückt und über einen Zapfhahn in ein Trinkbehältnis abgegeben werden. Wird der Schlauch oben durch den Deckel nach außen geführt, dann muß beim Entfernen des Deckels auch gleichzeitig immer der in das Schlauchinnere hineinragende Teil der Schlauchleitung zusammen mit dem Deckel herausgehoben werden, was im Hinblick auf die Vermeidung unerwünschten Vertropfens von Flüssigkeit hinderlich ist und im übrigen immer ein relativ hohes Abziehen des Deckels bedingt, damit auch vollständig der ganze in die Flasche hineinragende Schlauchabschnitt aus dieser herausgeführt werden kann. Wird hingegen die Schlauchleitung direkt durch die Seitenwandung, somit unterhalb der Deckelebene hindurchgeführt, dann ist dies aus Platzgründen im wesentlichen nur innerhalb des Bereiches des Flaschenhalses oder dessen Übergangs zum sonstigen Flaschenkörper möglich. Flaschen ohne nennenswerten Halsbereich, d. h. solche Flaschen, die über nahezu ihre gesamte Höhe einen im wesentlichen gleich großen Außendurchmeser aufweisen, können bei der vorbekannten Vorrichtung nur eingesetzt werden, wenn entweder die Flasche in ihrer Höhe so klein ist, daß noch oberhalb des eigentlichen Flaschenbehälters ausreichend Platz für das Vorbeiführen des Schlauches bis hin zu dessen Einleitung in die Drucktankwand vorliegt, oder wenn der Flaschenaußendurchmesser deutlich kleiner als der Innendurchmesser des Drucktankes ist. Da Vorratsbehälter für industrielle Flüssigklebstoffe, insbesondere anaerobe Klebstoffe und Zyanacrylatklebstoffe, wie sie bei Dosiergeräten für Flüssigklebstoffe eingesetzt werden, grundsätzlich eine sich im wesentlichen über ihre ganze Höhe erstreckende zylindrische Formgebung aufweisen, bei der nur oben im Auslaßbereich für das Aufschrauben eines Schraubdeckels ein kleiner Auslaßstutzen vorgesehen ist, würde die Anwendung dieser bekannten Ausschankvorrichtung für solche Flaschen mit industriellen Klebstoffen dazu führen, daß entweder das Aufnahmevolumen der Deckel überhaupt nicht genutzt werden könnte oder daß die Druckbehälter im Vergleich zu den aufzunehmenden Flaschen einen viel zu großen Innendurchmesser aufweisen müßten: beides würde zu deutlichen Überdimensionierungen führen.

Bei einem anderen bekannten Dosiergerät der eingangs genannten Art (Modell Loctite 1002) wird eine solche Überdimensionierung vermieden, indem dort der in dem Gerätegehäuse versenkte druckluftbeaufschlagbare Druckbehälter, der auf der Oberseite des Gehäuses etwas nach oben aus diesem Gerät vorsteht und in den von oben die Vorratsflasche hineingestellt wird, mit einem ebenen Deckel verschlossen wird. Die Schlauchleitung zur Abführung des Flüssigklebstoffes aus dem Drucktank wird hier jedoch wieder durch den Deckel nach außen geführt, wobei ein freies Ende derselben nach unten in den Drucktank und dort in das oben offene Vorratsgefäß mit dem Flüssigklebstoff hineinragt. Bei diesem vorgekannten Dosiergerät ist die Gefahr eine unbeabsichtigten Umwerfens des Vorratsbehälters mit dem Flüssigklebstoff sicher vermieden, da dieser in dem nach oben offenen Druckbehälter seitlich abgestützt ist. Da der Vorratsbehälter jedoch vollständig von dem nach oben offenen Drucktank umschlossen ist, bedingt ein Auswechseln des Vorratsbehälters, daß in den Drucktank von oben hineingelangt werden muß, weil nur so der Vorratsbehälter zugänglich ist. Die Reinigung und Wartung des Drucktank-Inneren ist, auch bei herausgenommenem Vorratsbehälter, wegen der beengten Platzverhältnisse etwas beschwerlich. Da die Schlauchleitung oben durch den Deckel in das Innere des Drucktankes geführt ist, muß beim Entfernen des Deckels auch wieder der in das Schlauchinnere hineinragende Teil der Schlauchleitung gleichzeitig zusammen mit dem Deckel herausgeführt werden. Zur Befestigung des Deckels sind Schraubbolzen vorgesehen, die im Bereich des Deckelrandes nach oben vorstehen; der Deckel wird mit entsprechenden Öffnungen von oben her so auf den Drucktank aufgesetzt, daß die Schraubbolzen durch die vorgesehenen Deckelöffnungen hindurchreichen, wonach dann mit Flügelmuttern o. ä. der Deckel von oben her gegen den Drucktank verspannt wird. Zum Aufsetzen bzw. Abnehmen des Deckels ist es daher erforderlich, jeweils die Muttern vollständig abzuschrauben und danach den Deckel in geeigneter Position aufzusetzen bzw. abzunehmen: ein besonders rasches Befestigen bzw. Entfernen des Deckels ist hierdurch jedoch nicht möglich.

Ausgehend hiervon liegt der Erfindung die Aufgabe zugrunde, bei einem Dosiergerät für Klebstoffe der eingangs genannten Art die Handhabung zu erleichtern, insbesondere ein rasches Entfernen und Aufsetzen des Deckels sowie eine verbesserte Zugänglichkeit des innerhalb des Druckbehälters befindlichen Vorratsbehälters zu erreichen.

Erfindungsgemäß wird diese Aufgabe einem Dosiergerät gemäß Oberbegriff des Anspruchs 1 dadurch gelöst, daß ein Teil des Aufnahmevolumens des Drucktankes, in dem der Vorratsbehälter angeordnet wird, im Deckel ausgebildet und innerhalb des Öffnungsbereichs des Deckels an der Wand des Druckbehälters ein verdickter Abschnitt vorgesehen ist, der in der Trennebene zwischen Deckel und Druckbehälter mündet, und daß ferner die Schlauchleitung zum Ableiten des Flüssigklebstoffs seitlich durch die Wand des Druckbehälters in den verdickten Abschnitt von außen eintritt, innerhalb desselben nach oben bis in die Trennebene zwischen Deckel und Druckbehälter geführt wird und dort innerhalb des Öffnungsbereiches des Deckels aus dem verdickten Abschnitt nach oben austritt, wobei der austretende Restabschnitt der Schlauchleitung innerhalb des Bereiches, der beim montierten Deckel vom Deckelaufnahmevolumen begrenzt wird, zur Drucktankmitte hin für die Einleitung des Schlauchendes in einen oben offenen, im Druckbehälter stehenden Vorratsbehälter umlenkbar ist.

Durch die erfindungsgemäße Formgebung des Dosiergerätes wird erreicht, daß ein gewisser oberer Bereich des im Druckbehälter aufgenommenen Vorratsbehälters für den Flüssigklebstoff bei aufgesetztem Deckel in das Aufnahmevolumen des Deckels hineinragt, somit bei abgenommenem Deckel über die obere Begrenzung des Druckbehälters heraussteht. Hierdurch ist bei abgenommenem Deckel eine leicht Zugänglichkeit des im Druckbehälter enthaltenen Vorratsbehälters von außen möglich, dies um so mehr, als hier auch keinerlei Schlauchleitung zwischen der Außenfläche des Vorratsbehälters und der Innenwandung des Druckbehälters stört. Ein Herausheben oder Hineinstellen des Vorratsbehälters erfordert kein Hineinlangen in den Druckbehälter mehr, sondern der Vorratsbehälter kann stets an einer Stelle in seinem oberen Bereich, etwa am Hals der oberen Behälteröffnung, mit der Hand erfaßt werden, wobei dieser Bereich bei abgenommenem Deckel außerhalb des in das Gerätegehäuse versenkten Druckbehälters liegt. Dadurch, daß erfindungsgemäß der im Gerätegehäuse versenkt angeordnete Druckbehälter nicht mehr eine solche Wandhöhe aufweist, wie dies im Falle eines flachen Deckels erforderlich wäre, ergibt sich aber auch eine leichte Handhabung bei Arbeiten wie z. B. einem Säubern des Bodens des Druckbehälters wegen hineingelaufenen Klebstoffs o.ä., da die Arbeitstiefe gegenüber dem gattungsgemäßen Gerät gering ist; bei solchen Reinigungsarbeiten stört auch keinerlei seitlich aus der Behälterwandung in den Druckbehälter eintretende und nach oben weitergeführte Schlauchleitung, da diese erst in der Trennebene zwischen Druckbehälter und Deckel und außerhalb der Öffnungsfläche des Druckbehälters vorliegt. Als weitere Vorteil des erfindungsgemäßen Dosiergerätes ergibt sich aber auch, daß die Schlauchleitung, mittels derer der Klebstoff aus dem Vorratsbehälter abgeführt wird, unterhalb des Deckels aus dem Druckbehälter abgeleitet wird, ohne daß sie zwischen Druckbehälter und Vorratsbehälter geführt werden müßte, da sie zwar unterhalb der Deckels, aber im Bereich der Trennebene zwischen diesem und dem Druckbehälter ausgeleitet wird. Die Schlauchleitung verläuft (bei aufgesetztem Deckel) völlig innerhalb des Aufnahmevolumens des Deckels und wird dort von oben her in das Innere der Flasche eingeführt. Hierdurch wird letztlich erreicht, daß keinerlei Führung der Schlauchleitung mehr durch den Deckel hindurch oder zwischen Vorratsbehälter und Druckbehälter erfolgen muß, was eine deutliche erleichterte Handhabe nach sich zieht.

Vorzugsweise ist weiterhin bei einem erfindungsgemäßen Dosiergerät im Bereich des Druckbehälters mindestens eine weitere Schlauchleitung vorgesehen, mittels derer Klebstoff aus dem Vorratsbehälter gleichzeitig an mindestens eine weitere Dosierstelle abgeführt werden kann.

Es ist bekannt, bei Dosiergeräten am Umfang des Druckbehälters nach oben vorstehende Schraubbolzen für die Befestigung des Deckels vorzusehen. Setzt man dies bei einem erfindungsgemäßen Dosiergerät ebenfalls ein, dann läßt sich eine weitere und erhebliche Vereinfachung in der Handhabung desselben sowie ein bedeutend schnelleres Schließen bzw. Öffnen des Deckels dadurch erreichen, daß radial vom Außenumfang des Deckels vorstehende, gleichmäßig an dessen Umfang (entsprechend der Lage der Schraubbolzen) verteilt angeordnete Befestigungslaschen vorgesehen sind, die zum Einführen der Schraubbolzen jeweils mit einer zentralen Öffnung und mit einem von dieser einseitig ausgehenden Einführungsschlitz versehen sind, wobei auf der Oberfläche dieser Laschen jeweils um diese Öffnung herum eine etwas vertiefte und ebene Fläche als Anschlagfläche für die von oben her anzuschraubenden Gegenmuttern (etwa als Flügelmuttern o.ä.) vorgesehen ist.

Eine besonders einfache und zweckmäßige Ausgestaltung ergibt sich bei einem erfindungsgemäßen Dosiergerät dadurch, daß die Innenseite des Deckels eine der Innenseite des Bodenabschnittes des Druckbehälters etwa entsprechende Form aufweist. Hierdurch wird bei aufgeschraubtem Deckel der gesamte Drucktank in seinem Inneren mit einer ungefähr symmetrischen Formgebung versehen, was für die Aufnahme der entstehenden Druckspannungen bei Druckfüllung von Vorteil ist.

Eine weitere vorzugsweise Ausgestaltung des erfindungsgemäßen Dosiergerätes besteht auch darin, daß der Druckbehälter mit einem oberen Abschnitt über die Deckplatte des Gerätegehäuses nach oben vorsteht.

In weiterer vorteilhafter Ausgestaltung der Erfindung wird vorgesehen, daß die Schraubenbolzen aus Befestigungsblöcken nach oben vorstehen, die um den Außenumfang des Druckbehälters verteilt und an diesem angeordnet oder befestigt sind, auf ihrer radial innenliegenden Seite am Druckbehälter anliegen und in ihrer Höhe über die Trennebene zwischen Deckel und Druckbehälter überstehen. Diese am Außenumfang des Druckbehälters leicht nach oben überstehenden Befestigungsblöcke für die Schraubenbolzen stellen bei Auflegen des Deckels dann eine geeignete Außenzentrierung für den Deckel dar, so daß sich eine erneut erleichterte Handhabung bei der Befestigung des Deckels ergibt.

Die Größe des Anteils des gesamten Drucktankvolumens, der vom Aufnahmevolumen des Deckels ausgebildet wird, wird vorzugsweise in einem Bereich von 27 % bis 43 % des Gesamt-Aufnahmevolumens des Drucktankes gewählt. Vorteilhafterweise wird auch im Bereich der Anlagefläche für den Deckel in der Halteplatte bzw. im oberen Rand des Druckbehälters eine umlaufende Dichtung eingelassen.

Eine weitere vorzugsweise Ausgestaltung besteht auch darin, daß die Schlauchleitung aus dem verdickten Abschnitt mittels einer schräg verlaufenden Leitfläche zu einer Austrittsöffnung in der Gehäuseaußenseite umgelenkt wird. Das erfindungsgemäße Dosiergerät ermöglicht mit seinem überraschend einfachen Aufbau eine merkliche Verbesserung in der Handhabbarkeit, insbesondere aber in der Zugänglichkeit des im Inneren des Druckbehälters vorgesehenen Vorratsbehälters, der nach abgenommenem Deckel unschwer erfaßt und wieder gefüllt bzw. ausgewechselt o.ä. werden kann, wobei sichergestellt ist, daß der Vorratsbehälter, ist er einmal im Inneren des Druckbehälters angebracht, mit Sicherheit nicht mehr unbeabsichtigt umfallen kann.

Die Erfindung wird nachfolgend anhand der Zeichnung im Prinzip beispielshalber noch näher erläutert. Es zeigen:

Fig. 1 eine Prinzipdarstellung (Schnittbild) durch ein erfindungsgemäßes Dosiergerät mit eingestelltem Vorratsbehälter für Flüssigklebstoff;

Fig. 2 eine Draufsicht auf das Dosiergerät aus Fig. 1, aber mit abgenommenem Deckel;

Fig. 3 eine Ansicht des Deckels für das Dosiergerät aus Fig. 2, von der Deckeloberseite her gesehen;

Fig. 4 einen Detailschnitt gemäß A-A in Fig. 2,und

Fig. 5 eine Schnittdarstellung längs Linie B-B in Fig. 2 (in einer im übrigen teilweise abgeänderten Ausführungsform zu Fig. 1).

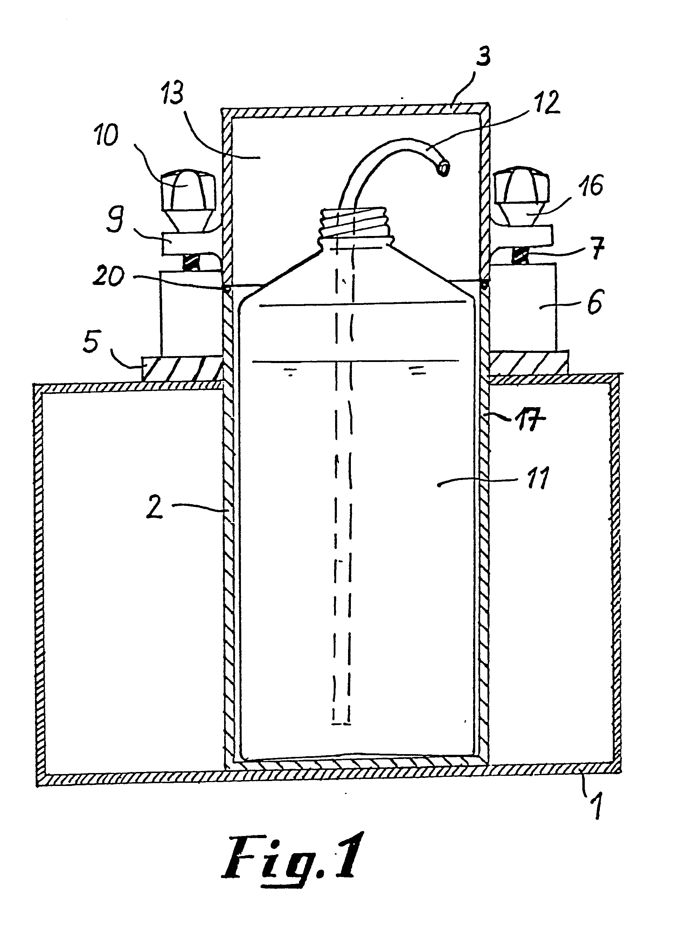

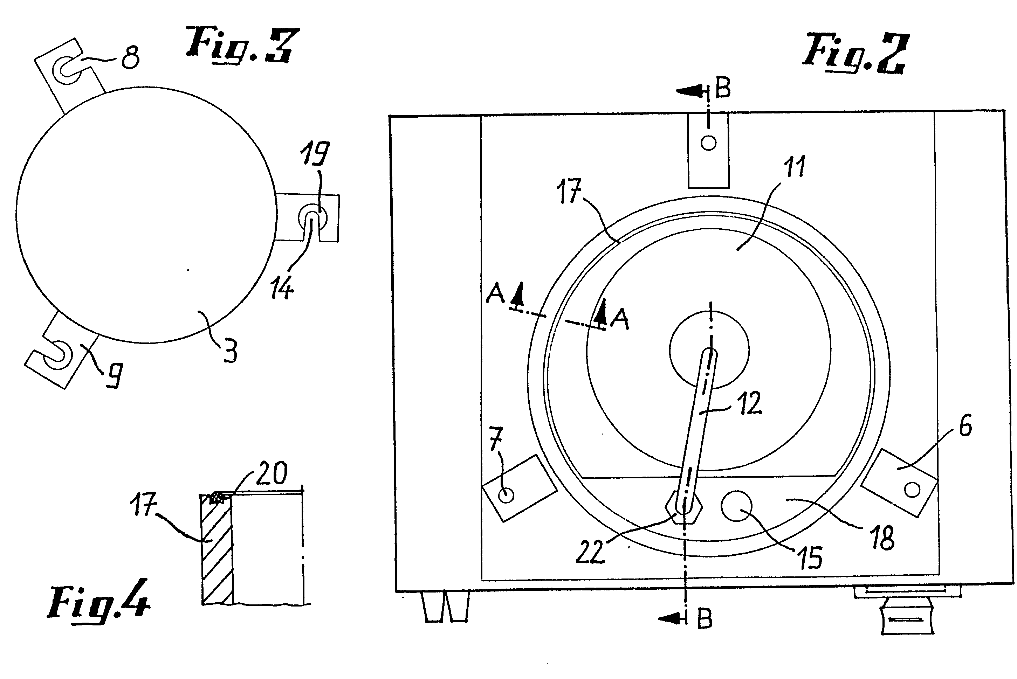

Das in Fig. 1 im Prinzip in Schnittdarstellung gezeigte Dosiergerät weist ein Gerätegehäuse 1 auf, in welchem ein Druckbehälter 2 versenkt angeordnet ist. Die im Gerätegehäuse 1 ansonsten noch vorhandenen Einrichtungen (wie z. B. Einrichtungen zum Steuergerät, sonstige Bedieneinrichtungen etc.) sind der Übersichtlichkeit halber nicht dargestellt. Der Druckbehälter 2 ist in das Gerätegehäuse 1 so eingelassen, daß er mit seinem Boden auf dem Boden des Gerätegehäuses 1 aufliegt, während seine Wände etwas über die obere Abdeckplatte des Gerätegehäuses 1 nach oben hin vorstehen. Der Druckbehälter 2 kann dabei in geeigneter Form im Gerätegehäuse 1 befestigt sein, wobei lösbare wie unlösbare Befestigungen in Frage kommen. Auf der oberen Abdeckplatte des Gerätegehäuses 1 ist eine Halteplatte 5 angebracht, die, wie in Fig. 2 gezeigt, an dieser Stelle den Druckbehälter 2 außen vollständig umgibt. Auf der Halteplatte 5 sind, wie ebenfalls Fig. 2 zeigt, gleichmäßig zueinander versetzt drei nach oben stehende Befestigungsblöcke 6 vorgesehen, die mit ihrer dem Druckbehälter 2 zugewandten Seite eine der Außenform des Druckbehälters 2 angepaßte Formgebung aufweisen und direkt am Druckbehälter 2 anliegen. Diese Befestigungsblöcke 6 sind in geeigneter Weise starr auf der Halteplatte 5 befestigt und dienen ihrerseits noch einmal als Befestigungsmittel für die Oberseite des Druckbehälters 2. Auf der Oberseite jedes Befestigungsblockes 6 ragt, wie Fig. 1 zeigt, jeweils nach oben ein Schraubenbolzen 7 vor, der im Befestigungsblock 6 verankert ist.

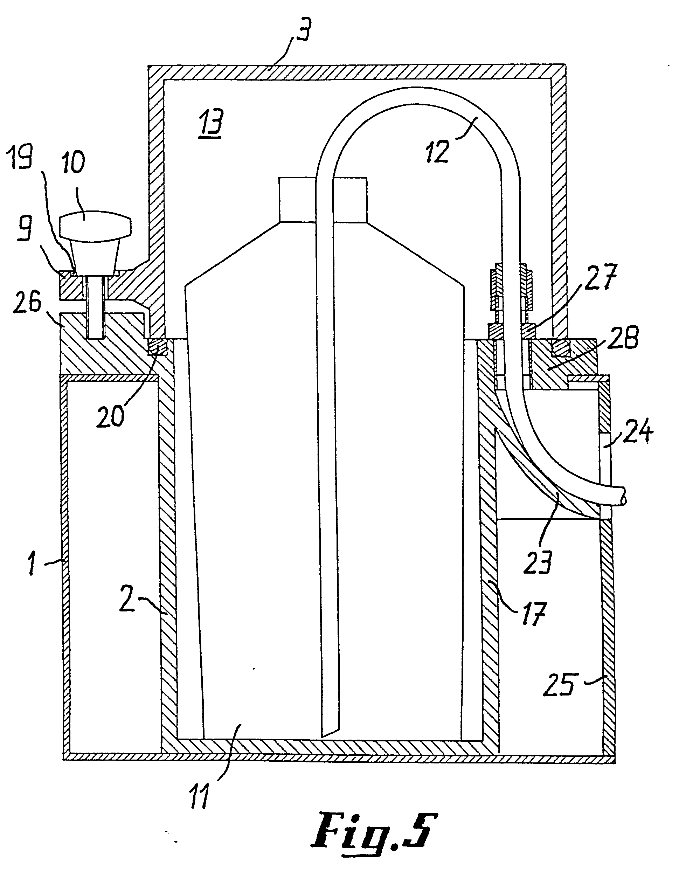

Auf den Druckbehälter 2 ist oben ein Deckel 3 aufgesetzt, wobei (vgl. Fig. 4) in der Trennfläche zwischen Deckel 3 und Druckbehälter 2 in die Wand 17 des Druckbehälters 2 eine ringsum laufende Dichtung 20 eingelassen ist, die etwas über diese Trennfläche nach oben vorsteht und beim Andrücken des Deckels 3 gegen den Druckbehälter 2 dichtend verpreßt wird. Am Außenumfang des Deckels 3 sind Befestigungslaschen 9 vorgesehen (vgl.Fig.1, Fig.3 oder Fig.5), die von ihrer Anordnung und Anzahl her gesehen der Anordnung und Anzahl der Befestigungsblöcke 6 genau entsprechen. Wie in Fig. 3 gezeigt, ist in der Mitte jeder der Befestigungslaschen 9 eine zentrale Öffnung 14 angebracht, von der aus ein Einführungsschlitz 8 nach außen zur Seite der Befestigungslaschen 9 verläuft. Die Einführungsschlitze 8 sind in allen Befestigungslaschen 9 im gleichen Drehsinn gerichtet und so angeordnet, daß beim Aufsetzen des Deckels 3 auf den Druckbehälter 2 durch eine einfache Drehung die Schraubbolzen 7 durch die Einführungsschlitze 8 in die jeweiligen zentralen Öffnungen 14 eingeführt werden können. Somit braucht zur Befestigung der Deckel 3 nur auf den Druckbehälter 2 oben aufgesetzt und um ein kurzes Stück verdreht zu werden, wonach dann die Schraubenbolzen 7 sich in ihren Befestigungsstellungen, nämlich in den zentralen Öffnungen 14 innerhalb der Befestigungslaschen 9, befinden. Anschließend werden Flügelmuttern, die oben auf die Schraubenbolzen 7 aufgeschraubt sind, nur noch angezogen, um über die Befestigungslaschen 9 den Deckel 3 fest gegen den Druckbehälter 2 zu verspannen. In Fig. 3 und Fig. 5 ist gezeigt, daß bei jeder Befestigungslasche 9 um die zentrale Öffnung 14 eine ebene Fläche 19 angeordnet ist, die leicht in die Befestigungslasche 9 von oben her eingesenkt ist (um eine Tiefe von ca. 0,5 bis 1 mm). Die Unterseiten der Flügelmuttern 10 sind jeweils mit einem Absatz 16 versehen, der , wie etwa in Fig. 1 ersichtlich, kegelstumpfförmig zulaufende Außenflächen hat, die an ihrem Ende eine ebene Endfläche ausbilden. Diese Endfläche des Absatzes 16 ist als Anschlagfläche ausgebildet, die beim Zudrehen der Flügelmuttern 10 auf der ebenen Anschlagfläche 19 in der entsprechenden Befestigungslasche 9 zur Anlage kommt. Die kreisförmigen ebenen Anschlagflächen 19 weisen dabei einen Durchmesser auf, der um ein Geringeres größer ist als der Durchmesser der Anschlagfläche der von oben anschraubbaren Flügelmuttern 10.

Es ist darauf hinzuweisen, daß bei dieser Ausbildung des Deckels 3 das Aufsetzen bzw. Abnehmen des Deckels kein völliges Abschrauben der Flügelmuttern bedingt: vielmehr müssen die Flügelmuttern 10 zum Entfernen des Deckels nur so weit gelockert werden, daß die Befestigungslaschen 9 mit einer leichten Drehung wieder in eine Position zurückgedreht werden können, in der der Deckel dann ohne Schwierigkeit nach oben abgehoben werden kann. Völlig dasselbe gilt umgekehrt für die Befestigung des Deckels, wozu die Schraubenbolzen 7 in die Befestigungslasche 9 eingeführt werden können, obgleich oben auf den Schraubenbolzen 7 noch die Flügelmuttern 10 vorhanden sind: auch hier müssen die Flügelmuttern lediglich in eine Höhe zurückgeschraubt sein, in der ein ungehindertes Einführen der Schraubenbolzen 7 durch die Einführungsschlitze 8 in die Befestigungslaschen 9 möglich ist. Es hat sich erwiesen, daß bei dieser Art der Befestigung der Deckel überraschend schnell befestigt bzw. wieder gelöst und abgenommen werden kann, so daß man diese Art von Verschluß auch als "Schnellverschluß" bezeichnen könnte. Das Hochziehen der Befestigungsblöcke 6 seitlich über den oberen Abschluß des Druckbehälters 2 hinaus in der bereits besprochenen Art begünstigt dabei die Handhabung des Ganzen sehr: denn der dadurch bewirkte Zentriereffekt des Deckels 3 auf den Druckbehälter 2 sichert eine rasche und sichere Drehung und Einführung der Schraubenbolzen 7 in die Öffnungen 14 (Fig. 3).

Für bestimmte Anwendungszwecke wäre es allerdings auch denkbar, daß man anstelle solcher seitlicher Einführungsschlitze radial gerichtete Einführungsschlitze nach außen vorsieht und gleichzeitig die Schraubenbolzen 7 in den Befestigungsblöcken 6 so anordnet, daß sie um einen in dem betreffenden Befestigungsblock 6 angebrachten Drehpunkt radial nach außen ausgeschwenkt werden können: hier müßte der Deckel dann in der Form befestigt werden, daß der Deckel zunächst aufgesetzt und dann so ausgerichtet wird, daß ein Schraubenbolzen nach oben durch den radialen Befestigungsschlitz in die Befestigungsöffnung innerhalb der Befestigungslasche eingeschwenkt werden kann. In dieser Stellung müßten dann auch bei einem zentrierten Deckel alle anderen Schraubenbolzen der Befestigung gleichermaßen nach oben in die Einführungsschlitze verschwenkbar sein, wonach dann die Muttern, etwa Flügelmuttern oben auf den Schraubenbolzen, nur noch anzuziehen wären.

Wie in Fig. 2 gezeigt ist, ist an der Wand 17 des Druckbehälters 2 im Bereich der vorderen Gerätefront ein verdickter Abschnitt 18 vorgesehen, der sich vorzugsweise über die gesamte Innenhöhe des Druckbehälters 2 erstreckt. Die Schlauchleitung 12, die auf der Außenseite des Gerätes an ein geeignetes Dosierventil und eine Abgabeeinrichtung angeschlossen ist, wird an einer geeigneten Stelle seitlich durch das Gerätegehäuse 1 so in den Druckbehälter eingeleitet, daß sie dort im Bereich des verdickten Abschnittes 18 über eine dort senkrecht verlaufende, unten jedoch abgeschlossene Bohrung nach oben in die Trennfläche zwischen Druckbehälter 2 und Deckel 3 hochlaufen kann. Denn der verdickte Abschnitt 18 endet ebenso wie die Wand 17 des Druckbehälters 2 in einer Ebene, nämlich der Trennebene zwischen Deckel 3 und Druckbehälter 2. In dieser Trennebene tritt, wie in Fig. 2 gezeigt ist, die Schlauchleitung oben wieder aus dem verdickten Abschnitt 18 der Wand 17 des Druckbehälters 2 aus und läuft dann in der aus Fig. 1 ersichtlichen Weise innerhalb des Aufnahmevolumens 13 des Deckels 3 so, daß sie von oben her in das Innere der Flasche 11 mit dem Flüssigklebstoff in der erforderlichen Tiefe hineinreicht. Über eine am Ausgang des senkrechten Kanales im verdickten Abschnitt 18 angebrachte geeignete Feststellmutter kann die Länge der in das Innere des Druckbehälters 2 frei hineinreichenden Schlauchleitung 12 in gewünschtem Maße eingestellt werden, indem die Feststellmutter 22 gelöst wird, dann die Schlauchleitung 12 weiter aus dem senkrechten Kanal herausgezogen oder tiefer in diesen hineingesteckt wird und anschließend dann durch Anziehen der Feststellmutter 22 die eingestellte Lage der Schlauchleitung 12 an dieser Stelle fixiert ist. Der Austrittspunkt der Schlauchleitung 12 aus dem verdickten Abschnitt 18 in der Trennebene zwischen Druckbehälter 2 und Deckel 3 ist an einer Stelle gewählt, die innerhalb der Fläche liegt, welche als freie Innenfläche vom Deckel 3 in der Trennebene umschlossen wird, so daß sichergestellt ist, daß die Schlauchleitung 12 auch bei verschlossenem Deckel innerhalb des Deckels aus dem verdickten Abschnitt 18 herauslaufen kann.

Ebenfalls innerhalb des Bereiches, der von der Innenöffnung des Deckels 3 außen umgrenzt wird, ist eine weitere Bohrung 15 innerhalb des verdickten Bereiches 18 der Wand 17 vorgesehen, durch die eine weitere (in der Figur nicht dargestellte) Schlauchleitung in ähnlicher Weise wie die Schlauchleitung 12 geführt werden kann, die dazu dient, gleichzeitig aus dem Vorratsbehälter 11 Klebstoff an eine weitere Dosierstelle abzuleiten. Wird diese Bohrung 15 aber nicht benötigt, dann kann sie z. B. durch einen Blindstopfen verschlossen werden.

Die Druckluft wird durch eine (nicht in der Figur gezeigte) Leitung durch die Seitenwand 17 in das Innere des Druckbehälters 2 eingeleitet.

Bei Inbetriebnahme des gezeigten Dosiergerätes ist ein Vorratsbehälter 11, der in Fig. 1 nur schematisch eingetragen ist, innerhalb des Druckbehälters 2 aufgestellt und mit Flüssigklebstoff gefüllt. Der Deckel 3 ist auf den Druckbehälter 2 aufgesetzt und über die Flügelmuttern 10 und die Laschen 9 gegenüber dem Druckbehälter 2 verspannt, so daß das Innenvolumen des Druckbehälters 2 (Aufnahmevolumen des Druckbehälters 2) zusammen mit dem Aufnahmevolumen 13 des Deckels 3 das Aufnahmevolumen des aus Druckbehälter 2 und Deckel 3 bestehenden Drucktankes ausbildet. Bei geschlossenem Deckel wird dann Druckluft in das Innere des Drucktankes eingelassen, so daß dort ein erhöhter Tankdruck aufgebaut wird. Die Schlauchleitung 12 ist von oben her in das Innere des Behälters 11 hineingeführt, so daß unter der Wirkung des Behälterinnendruckes der im Behälter 11 befindliche flüssige Klebstoff unter Druck in die Leitung 12 eingedrückt wird. Über ein Dosierventil, das von einer geeigneten einstellbaren Einrichtung innerhalb des Gerätegehäuses 1 angesteuert wird, kann dann der Durchfluß des flüssigen Klebstoffs durch die Leitung 12 (und ggf. durch eine weitere Leitung) zu der an ihrem Ende angeordneten (in den Figuren nicht gezeigten) Abgabeeinrichtung freigegeben bzw. blockiert werden.

Zum Öffnen des Drucktankes ist es dann nur erforderlich, den Innendruck über ein geeignetes Ventil, das mit der Druckzuleitung verbunden sein kann, abzulassen, anschließend die Flügelmuttern 10 ausreichend weit zu lockern und sodann durch einfache Drehung des Deckels 3 denselben aus seiner geschlossenen Position in ein Lage zu bringen, in der er unschwer nach oben abgehoben werden kann. Hiernach ist das Oberteil des Vorratsbehälters 11 frei von oben zugänglich, da es über das obere Ende des Druckbehälters 2 gut hinausragt. Anschließend kann dann das in den Vorratsbehälter 11 hineinragende Ende der Schlauchleitung 12 bequem aus dem Vorratsbehälter 11 herausgezogen und der Vorratsbehälter dann rasch entnommen bzw. gewechselt werden. Ist ein neuer Vorratsbehälter in den Drucktank 2 eingebracht worden, wird von oben her das freie Ende des Schlauches 12 wieder in diesen Behälter gesteckt und anschließend zur Inbetriebnahme der Deckel 3 wieder aufgesetzt, in die Verschlußposition gedreht und anschließend über die Flügelmuttern 10 gegen den Druckbehälter 2 verspannt.

Fig. 5 zeigt eine Schnittdarstellung durch das Dosiergerät aus Fig. 1, jedoch gemäß Schnittverlauf B-B, wie dieser in Fig. 2 eingezeichnet ist. Allerdings ist bei der Darstellung nach Fig. 5 eine andere Ausführungsvariante als in Fig. 1 insoweit gezeigt, als bei der Darstellung nach Fig. 5 nicht mehr eine eigene Halteplatte 5 auf der oberen Abdeckplatte des Gerätegehäuses 1 vorliegt, die den Drucktank 2 umschließt: bei der Ausführungsform nach Fig. 5 sind die Halteplatte 5 sowie die Befestigungsblöcke 6 nicht mehr als getrennte Teile ausgeführt, sondern insgesamt als eine sich am oberen Ende des Drucktankes 2 entsprechend radial verbreiternde Baueinheit 28 an den Drucktank 2 angegossen. Wie aus Fig. 5 gut ersichtlich ist, ist noch innerhalb des Öffnungsbereiches des Deckels 3 an einer Stelle, die aber seitlich neben der Wand 17 des Druckbehälters 2 unterhalb des Deckels 3 angeordnet ist, die Schlauchleitung 12 durch eine dichtende Befestigung 27, die dort in einer Öffnung innerhalb der oberen radialen Erweiterung 28 angeordnet ist, aus dem vom Deckel 3 aufgenommen Aufnahmevolumen 13 nach der Außenseite des Gerätes geführt. Dabei ist unterhalb der radialen Anlageplatte 28 an der Stelle, wo die Schlauchleitung 12 nach unten austritt, eine (ebenfalls einstückig an die Wand 17 des Drucktankes 2 angegossene) Leitfläche 23 vorgesehen, die eine stetige Krümmung zur Außenseite des Gerätes aufweist, wodurch die Schlauchleitung 12 entsprechend dieser Krümmung zur Außenseite des Gerätes geführt wird. Dabei ist im Gerätegehäuse 1 auf seiner Frontseite, an der die Schlauchleitung 12 zum Abführen des Klebstoffes austritt, eine Abdeckplatte 25 in das Gehäuse eingelassen, in der eine Austrittsöffnung 24 für die Schlauchleitung 12 angeordnet ist. Die Schlauchleitung 12 wird daher nach ihrem Austreten aus dem Druckrauminneren über die runde, gekrümmte Leitfläche 23 durch die Austrittsöffnung 24 zur Außenseite des Gerätes gebracht.

Bei der Ausführungsform nach Fig. 5 sind die Befestigungsblöcke 26, von denen in der zeichnerischen Darstellung der Fig. 5 links oben einer im Schnitt gezeigt ist, (wie bereits erwähnt) ebenfalls einstückig mit der Wand 17 des Drucktankes 2 ausgeführt.

Es versteht sich von selbst, daß im Gerätegehäuse 1 eine Vielzahl weiterer Einrichtungen untergebracht ist, die zum Betrieb des ganzen Gerätes erforderlich oder zweckmäßig sind und die gegebenenfalls ihrerseits an geeignete Energiequellen, etwa an das Stromnetz, angeschlossen werden. Insbesondere empfiehlt es sich dabei, diese Einrichtungen, bei denen es sich im wesentlichen um elektrische bzw. elektronische Steuereinrichtungen handelt, in Form von leicht von der Frontseite her einschiebbaren Modulen auszubilden, so daß sowohl das Beheben möglicherweise auftretender Fehler unschwer (durch einfaches Auswechseln des zugehörigen Einschub-Moduls) ausgeführt werden kann, zusätzlich aber auch möglicherweise eingesetzte automatische Programm- und Steuerfunktionen durch Einschub eines anderen Moduls rasch und unschwer ersetzt werden können. Der Übersichtlichkeit halber sind solche Einzelteile jedoch in den Figuren nicht dargestellt oder besprochen.

Das im Gerätedeckel ausgebildete Aufnahmevolumen muß nach Größe und Ausbildung so gewählt sein, daß es zumindest den überstehenden Hals des Vorratsbehälters sowie die aus diesem herauslaufende und hiernach nach unten umgelenkte Schlauchleitung im Bereich oberhalb des Druckbehälters völlig überdeckt.

**Patentansprüche**

1. Dosiergerät für Flüssigklebstoff, bei dem zur Aufnahme eines Vorratsbehälters (11) mit Flüssigklebstoff ein Drucktank vorgesehen ist, der aus einem in ein Gerätegehäuse (1) versenkten und mit Druckluft beaufschlagbaren Druckbehälter (2) sowie einem diesen oben dichtend verschließenden Deckel (3) besteht, und bei dem eine Schlauchleitung (12) vorgesehen ist, durch die der Flüssigklebstoff aus dem Druckbehälter (2) einem Dosierventil und einer Abgabeeinrichtung zuführbar ist, dadurch gekennzeichnet, daß ein Teil des Aufnahmevolumens (13) des Drucktankes für den Vorratsbehälter (11) im Deckel (3) ausgebildet und innerhalb des Öffnungsbereiches des Deckels (3) an der Wand (17) des Druckbehälters (2) ein verdickter Abschnitt (18) vorgesehen ist, der in der Trennebene zwischen Deckel (3) und Druckbehälter (2) mündet, und daß ferner die Schlauchleitung (12) zur Ableitung des Flüssigklebstoffes seitlich durch die Wand (17) des Druckbehälters (2) in den verdickten Abschnitt (18) von außen eintritt, innerhalb desselben nach oben bis in die Trennebene zwischen Deckel (3) und Druckbehälter (2) geführt wird und dort innerhalb des Öffnungsbereiches des Deckels (3) aus dem verdickten Abschnitt (18) nach oben austritt, wobei der austretende Restabschnitt der Schlauchleitung (12) innerhalb des Bereiches, der bei montiertem Deckel (3) vom Deckelaufnahmevolumen (13) begrenzt wird, zur Drucktankmitte hin für die Einleitung des Schlauchendes in den oben offenen, im Druckbehälter (2) stehenden Vorratsbehälter (11) umlenkbar ist.

2. Dosiergerät nach Anspruch 1, dadurch gekennzeichnet, daß die Innenseite des Deckels (3) eine der Innenseite des Bodenabschnitts des Druckbehälters (2) entsprechende Form aufweist.

3. Dosiergerät nach Anspruch 1 oder 2, bei dem am Umfang des Druckbehälters nach oben vorstehende Schraubbolzen für die Befestigung des Deckels angeordnet sind, dadurch gekennzeichnet, daß radial vom Außenumfang des Deckels (3) vorstehende, gleichmäßig an dessen Umfang verteilt angeordnete Befestigungslaschen (9) vorgesehen sind, die zum Einführen der Schraubbolzen (7) jeweils mit einer zentralen Öffnung (14) und einem von dieser einseitig ausgehenden Einführungsschlitz (8) sowie auf ihrer Oberseite mit einer um die Öffnung (14) herumgebrachten vertieften und ebenen Fläche (19) versehen sind.

4. Dosiergerät nach einem der Ansprüche 1 bis 3, dadurch gekennzeichnet, daß im Bereich des Druckbehälters (2) mindestens eine weitere Schlauchleitung zum Ableiten von Klebstoff aus dem Behälterinneren nach außen geführt ist.

5. Dosiergerät nach einem der Ansprüche 1 bis 4, dadurch gekennzeichnet, daß der Druckbehälter (2) mit einem oberen Abschnitt über die Deckplatte des Gerätegehäuses (1) nach oben vorsteht.

6. Dosiergerät nach Anspruch 1, dadurch gekennzeichnet, daß die Größe des Aufnahmevolumens (13) im Deckel (3) in einem Bereich von 27 % bis 43 % des Gesamt-Aufnahmevolumens (13, 16) des Drucktankes liegt.

7. Dosiergerät nach einem der Ansprüche 3 bis 6, dadurch gekennzeichnet, daß die Schraubenbolzen (7) aus Befestigungsplättchen (6) nach oben vorstehen, die um den Außenumfang des Druckbehälters (2) verteilt und an diesem befestigt sind, auf ihrer radial innenliegenden Seite am Druckbehälter (2) anliegen und in ihrer Höhe über die Trennebene zwischen Deckel (3) und Druckbehälter (2) überstehen.

8. Dosiergerät nach einem der Ansprüche 1 bis 7, dadurch gekennzeichnet, daß im Bereich der Anlagefläche für den Deckel (3) in die Wand (17) des Druckbehälters (2) eine umlaufende Dichtung (20) eingelassen ist.

9. Dosiergerät nach einem der Ansprüche 1 bis 8, dadurch gekennzeichnet, daß die Schlauchleitung (12) aus dem verdickten Abschnitt (18) mittels einer schräg verlaufenden Leitfläche (23) zu einer Austrittsöffnung (24) an der Geräteaußenseite hin umgelenkt wird.

**Claims**

1. Dosing apparatus for liquid adhesive, in which a pressure tank is provided for receiving a storage vessel (11) with liquid adhesive, said tank comprising a pressure vessel (2) positioned flush in an apparatus housing (1) and which can be supplied with compressed air, as well as a cover (3) sealing the same at the top and in which a hose line (12) is provided through which the liquid adhesive can be supplied from the pressure vessel (2) to a dosing valve and a dispensing device, characterized in that part of the reception volume (13) of the pressure tank is constructed for the storage vessel (11) in cover (3) and a thickened portion (18) is provided on the wall (17) of pressure vessel (2) within the opening region of cover (3) and which issues into the junction plane between cover (3) and pressure vessel (2) and that for leading off the liquid adhesive, hose line (2) enters laterally from the outside through the wall (17) of pressure vessel (2) into the thickened portion (18), is guided within the latter upwards into the junction plane between cover (3) and pressure vessel (2) and there passes outwards in the upwards direction from the thickened portion (18) within the opening region of cover (3), whilst within the region which is defined by the cover reception volume (13) with the cover (3) fitted, the exiting residual portion of hose line (12) is deflected towards the centre of the tank for introducing the hose end into the upwardly open storage vessel (11) standing in pressure vessel (2).

2. Dosing apparatus according to claim 1, characterized in that the inside of cover (3) has a shape corresponding to the inside of the base portion of pressure vessel (2).

3. Dosing apparatus according to claims 1 or 2, in which upwardly projecting threaded bolts for fixing the cover are provided on the circumference of the pressure vessel, characterized in that fixing plates (9) are uniformly distributed round the outer circumference of cover (3) and project radially therefrom, said plates being provided for the purpose of inserting threaded bolts (7) with in each case one central opening (14) and an introduction slot emanating from one side thereof, as well as on the top surface thereof with a recessed, planar surface (19) placed around the opening (14).

4. Dosing apparatus according to one of the claims 1 to 3, characterized in that in the vicinity of pressure (2) at least one further hose line is led outwards from the interior of the vessel for leading off the adhesive.

5. Dosing apparatus according to one of the claims 1 to 4, characterized in that an upper portion of the pressure vessel (2) projects upwards over the cover plate of the apparatus housing (1).

6. Dosing apparatus according to claim 1, characterized in that the size of the reception volume (13) in cover (3) is in a range 27 to 43 % of the total reception volume (13, 16) of the pressure tank.

7. Dosing apparatus according to one of the claims 3 to 6, characterized in that the threaded bolt (7) project upwards out of the fixing blocks (6), which are distributed around the outer circumference of pressure vessel (2) and are fixed thereto, engage on the radially inner side thereof on the pressure vessel (2) and whose height projects above the junction plane between cover (3) and pressure vessel (2).

8. Dosing apparatus according to one of the claims 1 to 7, characterized in that in the vicinity of the bearing surface for cover (3) in wall (17) of pressure vessel (2) is fitted an all-round seal (20).

9. Dosing apparatus according to one of the claims 1 to 8, characterized in that hose line (12) is deflected out of the thickened portion (18) by means of a sloping guide face (23) towards an exit opening (24) on the outside of the apparatus.

## Revendications

1. Appareil de dosage pour colle liquide, dans lequel est prévu, pour le logement d'un réservoir de stockage (11) de colle liquide, un récipient pour fluide sous pression qui est formé d'un réservoir sous pression (2) encastré dans un bâti d'appareil (1) et alimenté en air comprimé ainsi que d'un couvercle (3) l'obturant dans sa partie supérieure de manière étanche et dans lequel est prévu un tuyau souple (12) au moyen duquel la colle liquide peut être envoyée depuis le réservoir sous pression (2) vers une soupape de dosage et vers un dispositif de livraison, caractérisé par le fait que le couvercle (3) constitue une partie du volume d'accueil (13) du récipient pour fluide sous pression pour le réservoir de stockage (11) et qu'il est prévu à l'intérieur de la zone d'ouverture du couvercle (3), contre la paroi (17) du réservoir sous pression (2), une partie renforcée (18), laquelle débouche dans un plan de joint entre le couvercle (3) et le réservoir sous pression (2), et par le fait qu'en outre le tuyau souple (12) pour le départ de la colle liquide pénètre de l'extérieur, latéralement, à travers la paroi (17) du réservoir sous pression (2), dans la partie renforcée (18) à l'intérieur de laquelle il est guidé vers le haut jusque dans le plan de joint entre le couvercle (3) et le réservoir sous pression (2) et là, il ressort de la partie renforcée (18), vers le haut, à l'intérieur de la zone d'ouverture du couvercle (3), cependant que la partie restante du tuyau souple (12) sortant à l'intérieur de la zone, qui est limitée, le couvercle (3) étant monté, par le volume d'accueil (13) du couvercle, est retournée jusqu'au milieu du récipient de fluide sous pression afin d'introduire le tuyau souple dans le réservoir de stockage (11) ouvert à sa partie supérieure et situé dans le réservoir sous pression (2).

2. Appareil de dosage selon la revendication 1, caractérisé par le fait que le côté intérieur du couvercle (3) présente une forme correspondant au côté intérieur du fond du réservoir sous pression (2).

3. Appareil de dosage selon la revendication 1 ou 2, dans lequel des boulons filetés faisant saillie vers le haut sont placés à la périphérie du réservoir sous pression pour la fixation du couvercle, caractérisé par le fait que faisant saillie radialement depuis l'extérieur du périmètre du couvercle (3), régulièrement répartis sur ce périmètre, sont prévus des colliers de fixation (9) qui, pour la mise en place des boulons filetés (7), présentent chacun une ouverture centrale (14) et, partant de celle-ci, sur un seul côté, une fente d'introduction (8) de même que, sur leur face supérieure, une surface (19) plane évidée tout autour de l'ouverture (14).

4. Appareil de dosage selon l'une des revendications 1 à 3, caractérisé par le fait que dans la zone du réservoir sous pression (2) un autre tuyau souple au minimum est amené pour le départ de la colle de l'intérieur du réservoir vers l'extérieur.

5. Appareil de dosage selon l'une des revendications 1 à 4, caractérisé par le fait qu'une partie supérieure du réservoir sous pression (2) fait saillie vers le haut audessus de la plaque de couverture du bâti (1) de l'appareil.

6. Appareil de dosage selon la revendication 1, caractérisé par le fait que la taille du volume d'accueil (13) dans le couvercle (3) se situe dans une plage de 27 % jusqu'à 43 % du volume d'accueil total (13, 16) du récipient pour fluide sous pression.

7. Appareil de dosage selon l'une des revendications 3 à 6, caractérisé par le fait que les boulons filetés (7), faisant saillie vers le haut de plaquettes de fixation (6), sont répartis autour du périmètre du réservoir sous pression (2) et fixés à celui-ci, sont adjacents au réservoir sous pression (2) par leur face placée radialement vers l'intérieur et s'élèvent au-dessus du plan de joint entre le couvercle (3) et le réservoir sous pression (2).

8. Appareil de dosage selon l'une des revendications 1 à 7, caractérisé par le fait qu'un joint (20) circulaire est encastré dans la zone de la surface de montage du couvercle (3) dans la paroi (17) du réservoir sous pression (2).

9. Appareil de dosage selon l'une des revendications 1 à 8, caractérisé par le fait que le tuyau souple (12), sortant de la partie renforcée (18), est retourné au moyen d'une surface déflectrice (23) formant plan incliné jusqu'à une ouverture de sortie (24) sur le côté extérieur de l'appareil.

*Fig.1*

**Fig.3**

**Fig.2**

**Fig.4**

0 123 873

*Fig.5*